# FASCICULE DE BREVET EUROPEEN

(11) **EP 3 535 075 B1**
(45) Date de publication et mention de la délivrance du brevet: **05.08.2020**
(21) Numéro de dépôt: 17787513.5
(22) Date de dépôt: 10.10.2017
(51) Int. Cl.: B22C 7/02

(54) **MACHINE AMELIOREE D'ASSEMBLAGE PAR COLLAGE DE STRATES D'UN MODELE POUR PROCEDE DE MOULAGE A MODELE PERDU**
VERBESSERTE MASCHINE ZUR MONTAGE DURCH VERBINDUNG VON SCHICHTEN EINES MODELLS FÜR EIN FORMVERFAHREN MIT VERLORENEM MODELL
IMPROVED MACHINE FOR THE ASSEMBLY BY BONDING OF LAYERS OF A PATTERN FOR A LOST-PATTERN MOULDING METHOD

(30) Priorité: 04.11.2016 FR 1660675
(43) Date de publication de la demande: 11.09.2019
(73) Titulaire: PSA Automobiles SA, 78300 Poissy (FR)
(72) Inventeur: DUFLOUX, Mario, 08230 Sevigny la Forêt (FR); VERMEERSCH, Vincent, 08700 Neufmanil (FR); GABORIT, Nicolas, 08150 Le Chatelet sur Sormonne (FR); BIZEAU, Jean Marc, 92400 Courbevoie (FR)
(86) Numéro de dépôt international: PCT/FR2017/052771
(87) Numéro de publication internationale: WO 2018/083390

(56) Documents cités:
- WO-A1-2005/080068
- FR-A1- 2 976 830
- US-B2- 8 967 229
- THE METALCASTING DESIGN STUDIES ARE A JOINT EFFORT OF THEAMERICAN FOUNDRY SOCIETY AND THE STEEL FOUNDERS' SOCIETY OF AMERICA: "Aluminum Cylinder Block for General Motors Truck/SUV Engines", INTERNET CITATION, 1 août 2004 (2004-08-01), pages 1-31, XP002614450, Extrait de l'Internet: URL:http://www.sfsa.org/tutorials/eng_bloc k/GMBlock.pdf [extrait le 2010-01-01]

## Description

La présente invention porte sur une machine améliorée d'assemblage par collage de strates d'un modèle pour procédé de moulage à modèle perdu. L'invention trouve une application particulière avantageuse pour la réalisation de pièces complexes d'un moteur à combustion interne, tels que la culasse ou le carter-cylindres.

La technologie du procédé de moulage par modèle perdu utilise un intermédiaire appelé modèle pour l'obtention de pièces de fonderie. Le modèle, par exemple en polystyrène, est détruit lors de la mise en œuvre d'un tel procédé, c'est-à-dire que l'on "perd" le modèle pour obtenir la pièce de fonderie désirée. Lors de ce procédé, la géométrie de la pièce de fonderie désirée correspond à la géométrie du modèle perdu. Le modèle perdu peut être constitué par un assemblage de strates. Ainsi, dans le domaine de l'automobile, les modèles perdus de culasses d'un moteur à combustion interne peuvent être formés par l'assemblage de quatre ou cinq strates. Ces strates en polystyrène sont obtenues par moulage dans des empreintes en aluminium d'une matière injectée sous forme de billes.

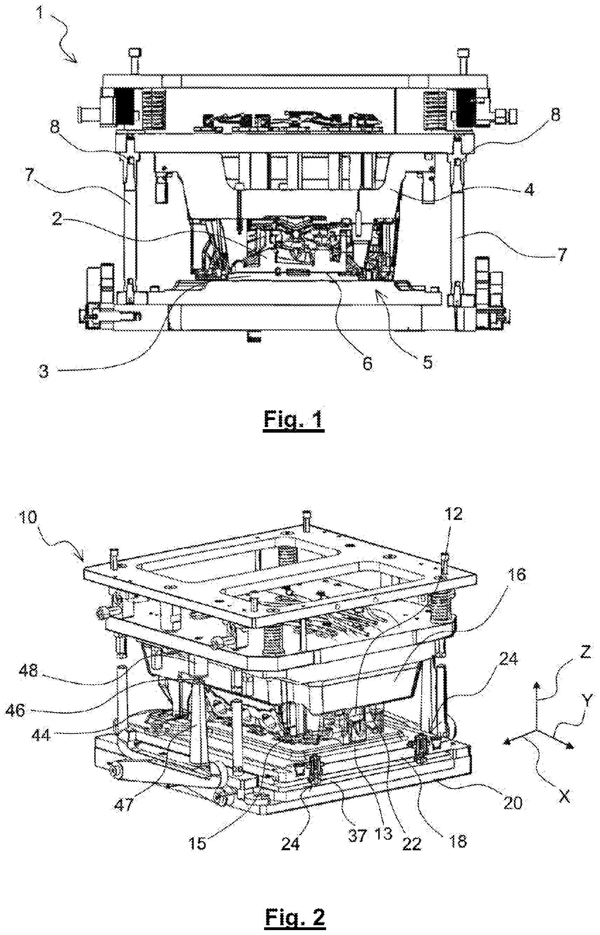

Ces strates sont assemblées par collage. Le collage des différentes strates constituant le modèle peut être réalisé à l'aide d'outillages de collage. La figure 1 montre une vue schématique d'un assemblage de deux strates 2 et 3 à l'aide d'une machine d'assemblage 1. Cette machine d'assemblage 1 se compose classiquement de deux supports, un conformateur de préhension 4 et un conformateur de dépose 5, portant chacun une strate du modèle, respectivement 2 et 3. Ces deux supports 4 et 5 sont adaptés à être déplacés l'un vers l'autre dans une direction de collage, ici la direction verticale. Le déplacement des deux supports 4 et 5 l'un vers l'autre permet le collage des strates 2 et 3 portées par les deux supports 4, 5 suivant un joint de collage référencé 6.

Le conformateur de dépose 5 est muni de butées 7 en opposition avec des butées 8 correspondantes du conformateur de préhension 4, pour permettre un arrêt en position au moment du collage des strates 2, 3. Toutefois, les modèles obtenus de plusieurs moules et plusieurs fournisseurs ont des différences dimensionnelles qui demandent une extrême précision de réglage des conformateurs 4, 5. Après réglage de hauteur des butées, le collage d'un jeu de modèles à l'autre ne prend pas en compte les différences dimensionnelles des strates 2, 3 suivant la direction verticale, ce qui peut occasionner soit un mauvais collage au niveau du joint 6, soit un serrage trop important générant un glissement local des strates 2, 3 au niveau du joint 6, et donc des rebuts.

L'invention vise à remédier efficacement à ces inconvénients en proposant une machine d'assemblage par collage de strates d'un modèle pour procédé de moulage par modèle perdu, la machine comportant :
- un premier support d'une première strate du modèle, dit conformateur de préhension, et
- un deuxième support d'une deuxième strate du modèle, dit conformateur de dépose, monté sur un bâti,
- le conformateur de préhension étant mobile par rapport au conformateur de dépose, suivant une direction de collage, pour coller ensemble les première et deuxième strates suivant un joint de collage,
caractérisée en ce que la machine d'assemblage comporte en outre:
- au moins un système de guidage d'un déplacement du conformateur de dépose par rapport au bâti suivant la direction de collage de manière à accompagner une descente du conformateur de préhension, et
- un organe élastique apte à appliquer lors de sa compression une pression de contact suivant le joint de collage lors d'une mise en contact de la première strate avec la deuxième strate.

L'invention permet ainsi au conformateur de dépose d'adopter automatiquement le réglage suivant la direction verticale adaptée à chaque type de strate présentée au collage, et cela quelle que soit son épaisseur susceptible de varier d'un lot à l'autre. On limite ainsi les pièces au rebut en phase de production. L'invention permet en outre de garantir une pression de contact homogène en tout point du joint de collage. Cette pression est adaptée aux efforts admissibles par les strates en polystyrène. L'invention assure donc un collage uniforme pour toutes les géométries dimensionnelles situées dans la plage de tolérance admissible aux strates.

Selon une réalisation, le système de guidage comporte une broche solidaire d'une plaque intermédiaire et une douille solidaire du conformateur de dépose et apte à coulisser le long de la broche, l'organe élastique sollicitant l'ensemble douille et conformateur de dépose contre une butée d'arrêt lorsqu'aucun effort n'est appliqué par le conformateur de préhension sur le conformateur de dépose.

Selon une réalisation, la douille est une douille à billes.

Selon une réalisation, la butée d'arrêt est formée par une cale de forme annulaire fixée à une extrémité de la broche.

Selon une réalisation, la plaque intermédiaire est solidaire du bâti.

Selon une réalisation, le conformateur de dépose comporte au moins une ouverture traversante autorisant le passage de la broche du système de guidage.

Selon une réalisation, l'organe élastique est un ressort.

Selon une réalisation, le ressort est taré à une valeur générant une force de poussée nécessaire pour un collage sans déformation ni glissement des strates l'une par rapport à l'autre le long du joint de collage.

Selon une réalisation, le système de guidage est configuré pour accompagner la descente du conformateur de préhension sur une course comprise entre 0,5 mm et 5 mm.

Selon une réalisation, le conformateur de préhension est monté sur un variateur numérique de la machine d'assemblage apte à assurer des vitesses de montée et de descente maîtrisées pour des opérations d'encollage et de collage de strates.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, est une vue de face d'une machine d'assemblage selon l'état de l'art pour le collage des strates d'un modèle perdu de culasse;

La figure 2 est une vue en perspective d'une machine d'assemblage améliorée selon l'invention pour le collage de strates d'un modèle perdu de culasse;

La figure 3 est une vue en perspective du conformateur de dépose de la machine d'assemblage selon l'invention portant une strate;

La figure 4a est une vue de face de la machine d'assemblage selon l'invention lorsque le système de guidage est en position de repos, avant mise en contact entre les deux strates à coller;

La figure 4b est une vue en coupe détaillée du système de guidage de la machine d'assemblage de la figure 4a;

La figure 5a est une vue de face de la machine d'assemblage selon l'invention lorsque le système de guidage est activé suite à une descente du conformateur de préhension pour établissement d'un joint de collage entre deux strates;

La figure 5b est une vue en coupe détaillée du système de guidage de la machine d'assemblage de la figure 5a;

La figure 6 est une vue en perspective du conformateur de dépose de la machine d'assemblage selon l'invention;

La figure 7 est une vue en perspective de la plaque intermédiaire de la machine d'assemblage selon l'invention.

Les éléments identiques, similaires, ou analogues conservent la même référence d'une figure à l'autre.

Par ailleurs, les termes relatifs du type "supérieur", "inférieur", "vertical" sont entendus par référence à une machine d'assemblage en condition d'utilisation sur un plan horizontal.

La figure 2 représente une machine d'assemblage 10 pour le collage de strates 12, 13 d'un modèle 15 pour procédé de moulage par modèle perdu. Le modèle 15 pourra comporter entre deux et six strates, de préférence cinq strates. La machine 10 comporte un premier support 16 d'une première strate 12, dit conformateur de préhension, et un deuxième support 18 d'une deuxième strate 13, dit conformateur de dépose, monté sur un bâti fixe 20.

Le conformateur de préhension 16 est muni de ventouses de dépression pour maintenir une strate 12 préalablement encollée. Le conformateur de préhension 16 est mobile par rapport au conformateur de dépose 18, suivant une direction de collage, pour coller ensemble les première et deuxième strates 12, 13 lors d'une descente du conformateur de préhension 16. Le collage entre les deux strates 12, 13 est effectué suivant un joint de collage référencé 22. On précise que la direction de collage est une direction verticale sensiblement perpendiculaire au plan d'extension du conformateur de dépose 18.

A cet effet, le conformateur de préhension 16 est monté sur un variateur numérique apte à assurer des vitesses de montée et de descente maîtrisées pour les opérations d'encollage et de collage de strates.

La machine d'assemblage 10 comporte un système de guidage 24 pour guider le déplacement du conformateur de dépose 18 par rapport au bâti 20, suivant la direction de collage de manière à accompagner la descente du conformateur de préhension 16.

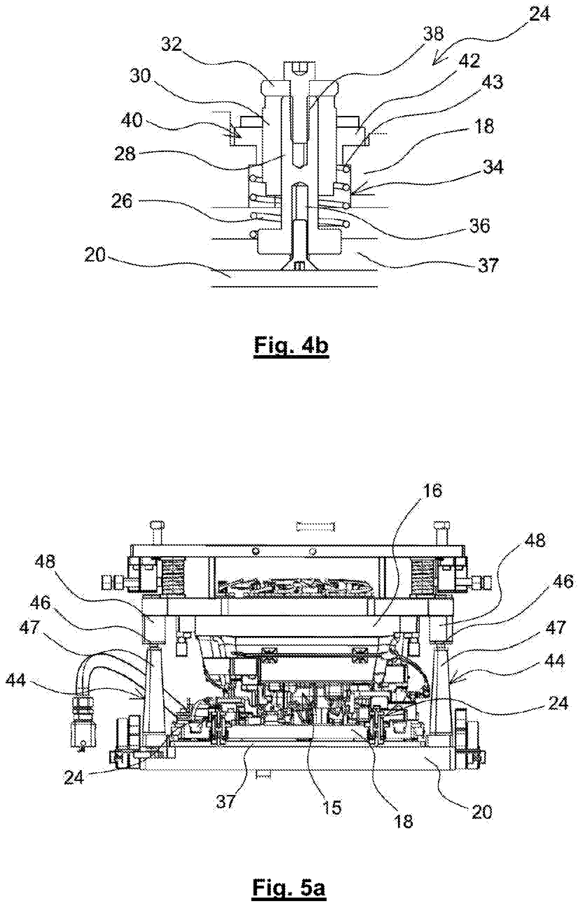

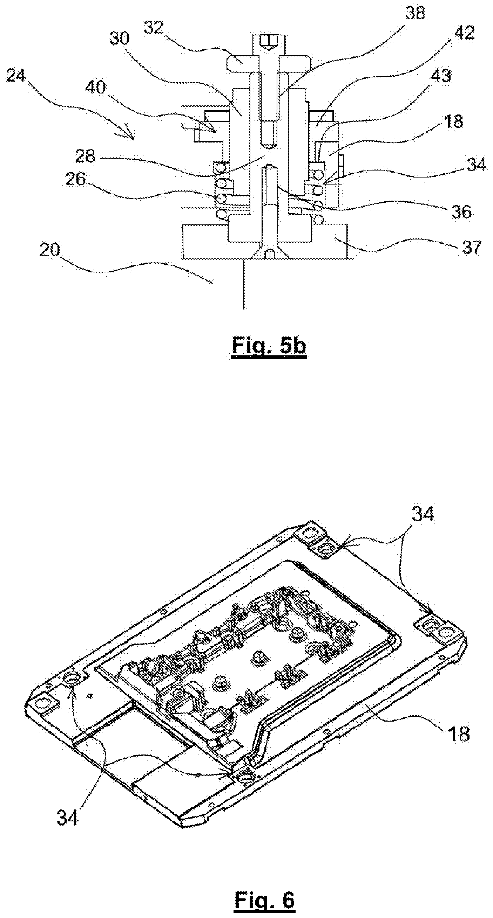

En outre, comme cela est visible sur les figures 4b et 5b, un organe élastique 26, tel qu'un ressort, est apte à appliquer lors de sa compression une pression de contact suivant le joint de collage 22 lors d'une mise en contact de la première strate 12 avec la deuxième strate 13.

Comme cela est représenté sur les figures 4b et 5b, le système de guidage 24 comporte une broche verticale 28 solidaire d'une plaque intermédiaire 37, et une douille à billes 30 solidaire du conformateur de dépose 18 et apte à coulisser le long de la broche 28. L'organe élastique 26 sollicite l'ensemble douille 30 et conformateur de dépose 18 contre une butée d'arrêt 32 lorsqu'aucun effort n'est appliqué par le conformateur de préhension 16 sur le conformateur de dépose 18. En variante, la douille 30 pourra être une douille lisse.

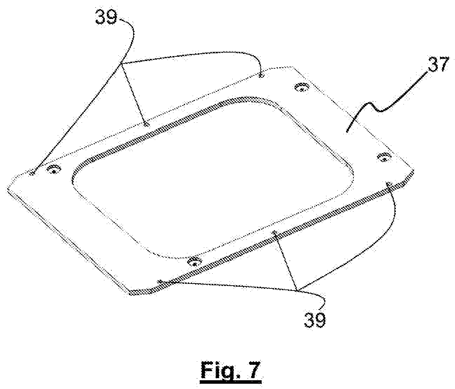

Plus précisément, la broche verticale 28 pénètre à l'intérieur d'une ouverture traversante 34 ménagée dans le conformateur de dépose 18, tel que montré sur la figure 6. La broche 28 comporte un premier alésage 36 ménagé dans son extrémité inférieure apte à recevoir un organe de fixation, tel qu'une vis, pour fixer la broche 28 à la plaque intermédiaire 37, représentée sur la figure 7, solidaire du bâti 20. A cet effet, la plaque intermédiaire 37 comporte des ouvertures 39 pour le passage d'organes de fixation avec le bâti 20. En outre, la broche 28 comporte un deuxième alésage 38 ménagé dans son extrémité supérieure apte à recevoir un organe de fixation, tel qu'une vis, pour fixer une cale de forme annulaire formant la butée 32 (cf. figures 4b et 5b).

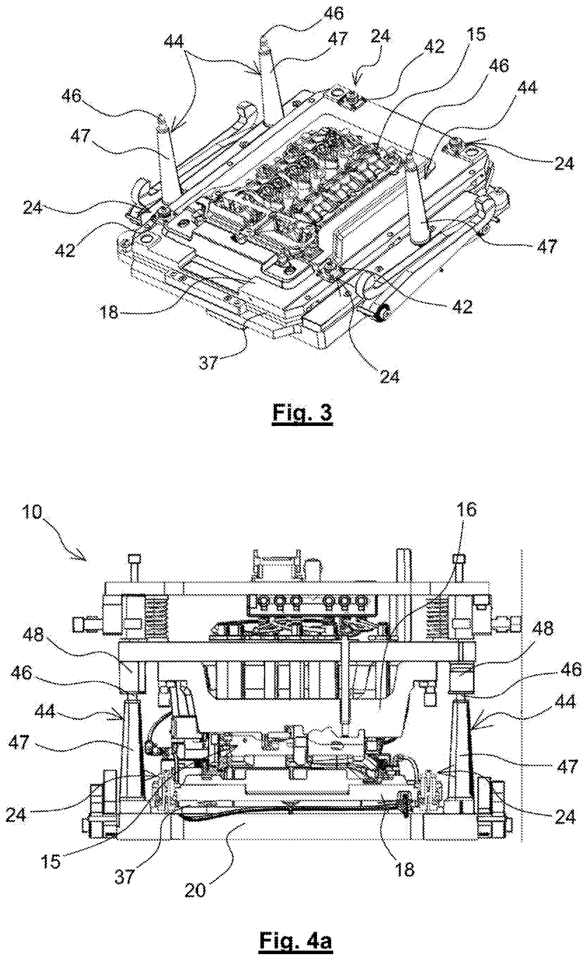

Par ailleurs, la douille à billes 30 est munie à sa périphérie externe d'un support de fixation 40 apte à solidariser la douille à billes 30 au conformateur de dépose 18. Comme cela est visible sur la figure 3, 4b, et 5b le support de fixation 40 comporte une plaque 42 de forme rectangulaire issue de la périphérie externe de la douille 30 et munie de trous pour le passage de vis de fixation.

Le ressort 26 est intercalé radialement entre la douille à billes 30 et la face interne du conformateur de dépose 18 délimitant l'ouverture traversante 34. Le ressort 26 prend appui d'une part contre la plaque intermédiaire 37, et d'autre part contre un épaulement 43 formé par une différence de diamètre de l'ouverture traversante 34.

Dans la position de repos représenté sur les figures 4a et 4b, le ressort 26 sollicite la douille à billes 30 contre la butée d'arrêt 32. Le conformateur de dépose 18 se trouve alors à distance de la plaque intermédiaire 37. Comme cela est représenté sur les figures 5a et 5b, lors d'une descente du conformateur de préhension 16, un effort est exercé sur le conformateur de dépose 18, ce qui a pour effet de comprimer le ressort 26 et d'autoriser un déplacement du conformateur de dépose 18 vers la plaque intermédiaire 37, suivant une direction verticale. En effet, la douille 30 coulisse via sa périphérie interne le long de la périphérie externe de la broche 28.

Du fait de sa compression, le ressort 26 exerce par réaction une pression sur le conformateur de dépose 18 et donc une pression de contact suivant le joint de collage 22 entre la première et la deuxième strate 12, 13. Le ressort 26 est taré à une valeur générant une force de poussée nécessaire pour un collage sans déformation ni glissement des strates 12,13 l'une par rapport à l'autre le long du joint de collage 22. En l'occurrence, le ressort 26 est taré en fonction du poids de la plaque de platine de manière à appliquer lors de sa compression un effort compris entre 20 et 50 Newtons.

Le système de guidage 24 est configuré pour accompagner la descente du conformateur de préhension 16 sur une course ayant comprise entre 0,5mm et 5 mm, de préférence de l'ordre de 5 mm. La tolérance de fabrication des strates 12,13 étant de l'ordre de 0.4mm, une telle plage de course permet d'absorber les variations de dimensions des strates 12, 13 d'un lot à l'autre.

Comme on peut le voir en figure 3, la machine d'assemblage 10 comporte en outre des plots de centrage 44 pour centrer le conformateur de préhension 16 sur le conformateur de dépose 18 au moment du collage des strates 12, 13. Le centrage est effectué suivant deux axes, dits axes X et Y, s'étendant dans le plan d'extension du conformateur de dépose. Les plots de centrage 44 permettent ainsi de garantir la répétition de l'opération de collage une fois qu'a été réalisé le réglage du collage des strates 12, 13 suivant les axes X et Y.

On prévoit par exemple trois plots de centrage 44, deux plots de centrage 44 étant situés d'un côté latéral du conformateur de dépose 18 et le troisième plot de centrage 44 étant situé du côté opposé. Ces plots de centrage 44 sont destinés à coopérer chacun avec une pièce creuse 48 solidaire du conformateur de préhension 16. Chaque plot de centrages 44 comporte par exemple un goujon 46 monté sur un support associé 47, ledit goujon 46 étant destiné à s'insérer dans le creux de la pièce 48.

Lors d'une phase de collage, une strate 12 est chargée sur le conformateur de préhension 16 par aspiration à l'aide des ventouses avant d'être présentée sur un masque de colle permettant un encollage uniforme de la strate 12.

Une fois la strate 12 encollée, le conformateur de préhension 16 est positionné en face du conformateur de dépose 18. Le conformateur de préhension 16 descend alors en direction du conformateur de dépose 18, jusqu'à ce que la strate 12 vienne en contact avec la strate 13 pour coller ensemble lesdites strates 12, 13 suivant le joint de collage 22.

Lors de l'opération, les plots de centrage 44 coopèrent avec les pièces correspondantes 48 solidaires du conformateur de préhension 16. En outre, le système de guidage 24 autorise un déplacement du conformateur de dépose 18 pour accompagner le déplacement du conformateur de préhension 16, tandis que la compression du ressort 26 permet de contrôler la pression de contact suivant le joint de collage 22, comme cela a été indiqué précédemment.

Le système de guidage 24 assure ainsi une compensation des variations de dimensions suivant l'axe Z, tandis que les plots de centrage 44 garantissent le centrage des strates 12, 13 suivant les axes X et Y. On garantit ainsi un encollage précis entre les deux strates 12 et 13.

De préférence, la descente du conformateur de préhension 16 s'arrête avant l'entrée en butée des plots de centrage 44 contre les pièces correspondantes 48 du conformateur de préhension 16.

En variante, l'organe élastique 26 pourra par exemple être une rondelle élastique, un vérin à gaz, ou tout autre organe élastique adapté à l'application.

## Revendications

1. Machine d'assemblage (10) par collage de strates (12, 13) d'un modèle (15) pour procédé de moulage par modèle perdu, ladite machine (10) comportant :
- un premier support (16) d'une première strate (12) dudit modèle (15), dit conformateur de préhension, et
- un deuxième support (18) d'une deuxième strate (13) dudit modèle (15), dit conformateur de dépose, monté sur un bâti (20),
- ledit conformateur de préhension (16) étant mobile par rapport audit conformateur de dépose (18), suivant une direction de collage, pour coller ensemble lesdites première et deuxième strates (12, 13) suivant un joint de collage (22), **caractérisée en ce que** ladite machine d'assemblage (10) comporte en outre:
- au moins un système de guidage (24) d'un déplacement dudit conformateur de dépose (18) par rapport audit bâti (20) suivant la direction de collage de manière à accompagner une descente dudit conformateur de préhension (16), et
- un organe élastique apte à appliquer lors de sa compression une pression de contact suivant ledit joint de collage (22) lors d'une mise en contact de ladite première strate (12) avec ladite deuxième strate (13).

2. Machine d'assemblage selon la revendication 1, **caractérisée en ce que** ledit système de guidage (24) comporte une broche (28) solidaire d'une plaque intermédiaire (37) et une douille (30) solidaire dudit conformateur de dépose (18) et apte à coulisser le long de ladite broche (28), ledit organe élastique (26) sollicitant l'ensemble douille (30) et conformateur de dépose (18) contre une butée d'arrêt (32) lorsqu'aucun effort n'est appliqué par ledit conformateur de préhension (16) sur ledit conformateur de dépose (18).

3. Machine d'assemblage selon la revendication 2, **caractérisée en ce que** ladite douille (30) est une douille à billes.

4. Machine d'assemblage selon la revendication 2 ou 3, **caractérisée en ce que** ladite butée d'arrêt (32) est formée par une cale de forme annulaire fixée à une extrémité de ladite broche (28).

5. Machine d'assemblage selon l'une quelconque des revendications 2 à 4, **caractérisée en ce que** ladite plaque intermédiaire (37) est solidaire dudit bâti (20).

6. Machine d'assemblage selon l'une quelconque des revendications 2 à 5, **caractérisée en ce que** ledit conformateur de dépose (18) comporte au moins une ouverture traversante (34) autorisant le passage de ladite broche (28) dudit système de guidage (24).

7. Machine d'assemblage selon l'une quelconque des revendications 1 à 6, **caractérisée en ce que** ledit organe élastique (26) est un ressort.

8. Machine d'assemblage selon la revendication 7, **caractérisée en ce que** ledit ressort (26) est taré à une valeur générant une force de poussée nécessaire pour un collage sans déformation ni glissement desdites strates (12, 13) l'une par rapport à l'autre le long dudit joint de collage (22).

9. Machine d'assemblage selon l'une quelconque des revendications 1 à 8, **caractérisée en ce que** ledit système de guidage (24) est configuré pour accompagner ladite descente dudit conformateur de préhension (16) sur une course comprise entre 0,5mm et 5 mm.

10. Machine d'assemblage selon l'une quelconque des revendications 1 à 9, **caractérisée en ce que** ledit conformateur de préhension (16) est monté sur un variateur numérique de ladite machine d'assemblage (10) apte à assurer des vitesses de montée et de descente maîtrisées pour des opérations d'encollage et de collage desdites strates (12, 13).

## Patentansprüche

1. Montagemaschine (10) durch verkleben von schichten (12, 13) eines modells (15) zum formen durch verlorenes modell, wobei die maschine (10) umfasst:
- einen ersten träger (16) einer ersten schicht (12) des modells (15), des greifers und
- einen zweiten träger (18) einer zweiten schicht (13) des modells (15), wobei der ablagerungsformer auf einem rahmen (20) montiert ist,
- wobei der greifformer (16) relativ zu dem ablagerungsformer (18) in einer verbindungsrichtung beweglich ist, um die erste und die zweite schicht (12, 13) entlang einer verbindungsverbindung (22) zu verbinden, die in gekennzeichnet ist was die montagemaschine (10) ferner umfasst:
- mindestens ein führungssystem (24) zur bewegung des ablagerungsformers (18) relativ zu dem rahmen (20) in der verbindungsrichtung, um einen abstieg des greifformers (16) zu begleiten, und
- ein elastisches element, das in der Lage ist, während seiner kompression einen kontaktdruck entlang der klebeverbindung (22) auszuüben, wenn die erste schicht (12) mit der zweiten schicht (13) in kontakt gebracht wird.

2. Montagemaschine nach anspruch 1, **dadurch gekennzeichnet, dass** das führungssystem (24) eine spindel (28) umfasst, die an einer zwischenplatte (37) befestigt ist, und eine Hülse (30), die an dem ablagerungsformer (18) befestigt ist und in der Lage, entlang der spindel (28) zu gleiten, wobei das elastische element (26) die buchse (30) drückt und die formgeberanordnung (18) gegen einen stopper (32) ablegt, wenn keine anstrengung unternommen wird wird durch den greifformer (16) auf den entfernungsformer (18) aufgebracht.

3. Montagemaschine nach anspruch 2, **dadurch gekennzeichnet, dass** die fassung (30) eine kugelpfanne ist.

4. Montagemaschine nach anspruch 2 oder 3, **dadurch gekennzeichnet, dass** der stopfen (32) durch einen an einem ende der spindel (28) befestigten ringkeil ausgebildet ist.

5. Montagemaschine nach einem der ansprüche 2 bis 4, **dadurch gekennzeichnet, dass** die zwischenplatte (37) in den rahmen (20) integriert ist.

6. Montagemaschine nach einem der ansprüche 2 bis 5, die **dadurch gekennzeichnet ist, dass** der ablagerungsformer (18) mindestens eine Durchgangsöffnung (34) aufweist, die den Durchgang des stifts (28) des führungssystems ermöglicht (24).

7. Montagemaschine nach einem der ansprüche 1 bis 6, **dadurch gekennzeichnet, dass** das elastische element (26) eine feder ist.

8. Montagemaschine nach anspruch 7, **dadurch gekennzeichnet, dass** die feder (26) auf einen Wert kalibriert ist, der eine Druckkraft erzeugt, die zum verbinden ohne verformung oder gleiten der schichten (12, 13) relativ zueinander erforderlich ist zum anderen entlang der klebeverbindung (22).

9. Montagemaschine nach einem der ansprüche 1 bis 8, **dadurch gekennzeichnet, dass** das Führungssystem (24) so konfiguriert ist, dass es den Abstieg des Greifers (16) bei einem Hub zwischen 0,5 mm und 5 mm begleitet.

10. Montagemaschine nach einem der ansprüche 1 bis 9, **dadurch gekennzeichnet, dass** der greifformer (16) an einem digitalen variator der montagemaschine (10) montiert ist, der anstiegsgeschwindigkeiten gewährleisten kann und kontrollierter abstieg zum kleben und verkleben der schichten (12, 13).

## Claims

1. Assembling machine (10) by gluing layers (12, 13) of a model (15) for molding process by lost model, said machine (10) comprising :
- a first support (16) of a first layer (12) of said model (15), said gripping shaper, and
- a second support (18) of a second layer (13) of said model (15), said depositing shaper, mounted on a frame (20),
- said gripping shaper (16) being movable relative to said depositing shaper (18), in a bonding direction, for bonding said first and second layers (12, 13) along a bonding joint (22), **characterized in** what said assembly machine (10) further comprises :
- at least one guide system (24) for movement of said depositing shaper (18) relative to said frame (20) in the gluing direction so as to accompany a descent of said gripping shaper (16), and
- an elastic member capable of applying during its compression a contact pressure along said bonding joint (22) when bringing said first layer (12) into contact with said second layer (13).

2. Assembling machine according to claim 1, **characterized in that** said guide system (24) comprises a spindle (28) secured to an intermediate plate (37) and a socket (30) secured to said depositing shaper (18) and able to slide along said spindle (28), said elastic member (26) using the socket assembly (30) and depositing shaper (18) assembly against a stopper (32) when no force is applied by said gripping shaper (16) on said depositing shaper (18).

3. Assembling machine according to claim 2, **characterized in that** said socket (30) is a ball socket.

4. Assembling machine according to claim 2 or 3, **characterized in that** said stopper (32) is formed by an annular wedge fixed to one end of said spindle (28).

5. Assembling machine according to any one of claims 2 to 4, **characterized in that** said intermediate plate (37) is integral with said frame (20).

6. Assembling machine according to any one of claims 2 to 5, **characterized in that** said depositing shaper (18) has at least one through opening (34) allowing the passage of said pin (28) of said guide system (24).

7. Assembling machine according to any one of claims 1 to 6, **characterized in that** said elastic member (26) is a spring.

8. Assembling machine according to claim 7, **characterized in that** said spring (26) is calibrated to a value generating a pushing force necessary for bonding without deformation or sliding of said layers (12, 13) relative to one another to the other along said bonding joint (22).

9. Assembling machine according to any one of claims 1 to 8, **characterized in that** said guide system (24) is configured to accompany said descent of said gripper (16) on a stroke between 0.5mm and 5 mm.

10. Assembling machine according to any one of claims 1 to 9, **characterized in that** said gripping shaper (16) is mounted on a digital variator of said assembly machine (10) capable of ensuring rise speeds and controlled descent for gluing and bonding operations of said layers (12, 13).
